# DEMANDE DE BREVET EUROPEEN

(11) **EP 3 001 259 A1**
(43) Date de publication de la demande: **30.03.2016**
(21) Numéro de dépôt: 14186682.2
(22) Date de dépôt: 26.09.2014
(51) Int. Cl.: G04C 5/00, G04B 17/32, G04B 18/02, H02K 49/10

(54) **Dispositif régulateur de la marche d'un mouvement horloger mécanique**

(71) Demandeur: ETA SA Manufacture Horlogère Suisse, 2540 Grenchen (CH)
(72) Inventeur: Winkler, Pascal, 2074 Marin (CH); Di Domenico, Gianni, 2000 Neuchâtel (CH); Born, Jean-Jacques, 1110 Morges (CH)
(74) Mandataire: Surmely, Gérard

(57) **Abrégé**

Le dispositif régulateur (2) de la marche d'un mouvement horloger mécanique comprend:
- un châssis (4);
- un résonateur fixé au châssis et comprenant une première structure magnétique annulaire (8) ayant un premier nombre N1 d'aimants agencés régulièrement en cercle et une structure élastique (20,21,22);
- une deuxième structure magnétique annulaire (14) ayant un deuxième nombre N2 d'aimants et définissant un axe central (16) autour duquel elle tourne, N2 étant différent de N1.

Le résonateur est agencé de manière qu'un mode de résonance dans lequel la première structure magnétique subit une translation curviligne, de préférence sensiblement circulaire, autour de l'axe central est excité par la rotation de la deuxième structure magnétique. Les deux structures magnétiques définissent un engrenage magnétique cycloïdal de sorte que le dispositif régulateur incorpore un réducteur de fréquence entre la fréquence de résonance et la fréquence de rotation de la deuxième structure magnétique solidaire d'une roue d'échappement.

## Description

### Domaine technique

La présente invention concerne le domaine des dispositifs régulateur de la vitesse angulaire relative entre une structure magnétique et un résonateur couplés magnétiquement de manière à définir ensemble un tel dispositif régulateur.

En particulier, l'invention concerne un mouvement horloger mécanique équipé d'un dispositif régulateur de sa marche qui est formé par un résonateur et un échappement magnétique associé à ce résonateur. Par échappement, on comprend généralement dans le domaine horloger un système formé par un mécanisme d'entretien du mouvement périodique d'un mode de résonance du résonateur et par un mécanisme de comptage des périodes de ce mouvement périodique pour cadencer l'entraînement d'un dispositif, en particulier d'un affichage d'au moins une information temporelle. On notera que le mécanisme d'entretien et le mécanisme de comptage sont généralement formés par un seul et même mécanisme de distribution de l'énergie, fournie par un dispositif moteur, qui assure les deux fonctions ; comme c'est le cas dans le cadre de la présente invention.

En particulier, l'invention concerne les dispositifs régulateurs magnétiques pour mouvements horlogers mécaniques dans lesquels il est prévu un couplage magnétique direct entre un résonateur et une structure magnétique annulaire.

Finalement, l'invention concerne un dispositif régulateur horloger dans lequel la roue d'échappement présente une rotation continue, c'est-à-dire non saccadée comme c'est le cas dans les dispositifs régulateurs classiques formés d'un balancier-spiral et d'un échappement à ancre suisse formant un arrêtoir et une roue d'échappement dentée.

### Arrière-plan technologique

Dans le domaine de la montre mécanique, on utilise généralement des dispositifs régulateurs formés d'un balancier-spiral qui oscille et d'un échappement, notamment à ancre suisse, comprenant un arrêtoir, notamment une ancre, et une roue d'échappement dentée, l'arrêtoir étant un organe intermédiaire entre le balancier et la roue d'échappement et oscillant de manière synchrone avec le balancier. L'arrêtoir a un mouvement de va-et-vient avec des périodes de repos, ce qui engendre une avance saccadée de la roue d'échappement. Ces dispositifs régulateurs, bien qu'ayant été perfectionnés de manière remarquable dans les développements de l'horlogerie traditionnelle, présentent un assez mauvais rendement dû notamment au mouvement oscillant de l'ancre avec ses deux positions extrêmes de repos où elle bloque la roue d'échappement. On connaît aussi l'échappement à cylindre, lequel est sans ancre. Dans ce dernier cas, le dispositif formant arrêtoir est intégré dans un tube ouvert formant l'arbre du balancier. La roue d'échappement présente aussi une avance saccadée et le rendement est fortement diminué par le fait que les dents de cette roue d'échappement pressent successivement et alternativement contre la paroi intérieure et la paroi extérieure du tube ouvert.

On connaît aussi depuis de nombreuses années des dispositifs de régulation de la vitesse d'une roue, nommé aussi rotor, par un couplage magnétique, aussi nommé accouplement magnétique, qui permettent de résoudre les inconvénients des dispositifs traditionnels susmentionnés. L'application horlogère est aussi connue, mais les réalisations industrielles sont rares, voire inexistantes. De nombreuses demandes de brevet relatives à ce domaine ont été déposées par la société Horstmann Clifford Magnetics pour des inventions de C. F. Clifford. On citera notamment les documents FR 1.113.932 et US 2,946,183. Il est aussi connu du modèle d'utilité japonais JPS 5263453U (demande No JP19750149018U) un échappement magnétique du même type avec un couplage magnétique direct entre un résonateur et une roue d'échappement formée par un disque supportant deux pistes magnétiques annulaires coaxiales. Ces deux pistes magnétiques sont sensiblement contiguës et comprennent chacune des plaquettes à haute perméabilité magnétique formant des zones magnétiques qui sont agencées régulièrement avec une période angulaire donnée, les plaquettes de la première piste étant décalées ou déphasées d'une demi-période relativement aux plaquettes de la seconde piste. Entre les plaquettes sont prévues des zones amagnétiques, c'est-à-dire des zones à faible perméabilité magnétique. On obtient ainsi des zones à haute perméabilité magnétique distribuées alternativement d'un côté et de l'autre d'un cercle correspondant à la position de repos d'au moins un aimant porté par l'extrémité d'une branche d'un résonateur du type diapason. L'aimant du résonateur est couplé magnétiquement à ces deux pistes déphasées de sorte qu'il est alternativement attiré par les zones magnétiques de la première piste et de la deuxième piste. La roue d'échappement tourne ainsi avec une vitesse de rotation telle qu'elle avance d'une période angulaire des deux pistes à chaque oscillation du résonateur. Ce qui est remarquable dans un tel système, c'est l'absence de frottement mécanique dans l'échappement magnétique et le fait que la roue d'échappement présente une rotation sensiblement continue dans un sens de rotation unique.

On remarquera que les dispositifs régulateurs du type magnétique susmentionnés sont prévus pour des résonateurs ayant un seul degré de liberté pour chaque partie subissant un mouvement de résonance. En général, on agence le résonateur de manière que l'aimant, porté par un organe subissant un mouvement de résonance, oscille selon une direction sensiblement radiale, c'est à-dire sensiblement orthogonale aux deux pistes magnétiques annulaires. Dans ce cas, les réalisations mentionnées de l'art antérieur présentent l'avantage d'avoir une réduction de fréquence entre la fréquence de l'oscillation du résonateur et la fréquence de rotation (en tours /s) de la roue d'échappement portant la structure magnétique. Aucun mobile pivoté ne tourne ou n'oscille à une fréquence de l'ordre de grandeur de la fréquence de résonance. Le facteur de réduction est donné par le nombre de périodes angulaires des pistes magnétiques annulaires.

Toutefois, l'avantage découlant d'une réduction de fréquence entre l'oscillation du résonateur et la rotation de la roue d'échappement a un corolaire qui pose un problème pour la force du couplage magnétique étant donné les dimensions d'un mouvement horloger classique. En effet, pour augmenter la réduction de fréquence il est nécessaire d'augmenter le nombre de périodes des pistes magnétiques. Pour un diamètre donné de la roue d'échappement, une augmentation du nombre de périodes a pour conséquence une diminution de surface des zones magnétiques des pistes annulaires. Comme l'aimant du résonateur s'étend généralement sur une distance angulaire inférieure à une demi-période des pistes annulaires, les dimensions de cet aimant doivent aussi diminuer lorsque la réduction de fréquence augmente. On comprend donc que la force d'interaction magnétique entre le résonateur et la roue d'échappement diminue; ce qui limite le couple moteur pouvant être appliqué à la roue d'échappement et augmente donc le risque de perte de la synchronisation entre ce résonateur et cette roue d'échappement, nommé aussi décrochage du système réglant. Par synchronisation, on comprend ici une relation proportionnelle déterminée entre la fréquence de résonance et la fréquence de rotation de la roue d'échappement.

### Résumé de l'invention

La présente invention a pour but de fournir un nouveau type de dispositif régulateur de la marche d'un mouvement horloger dans lequel le résonateur présente un mode de résonance pouvant avoir une fréquence supérieure à la fréquence de rotation ou d'oscillation des mobiles de ce mouvement horloger et dans lequel toutes les parties mobiles ont un mouvement continu dans un même sens.

A cet effet, la présente invention concerne un dispositif régulateur de la marche d'un mouvement horloger mécanique, ce dispositif régulateur comprenant :
- un châssis;
- un résonateur fixé au châssis et comprenant une première structure magnétique annulaire et périodique ayant un premier nombre entier N1 de périodes angulaires et définissant un premier axe central, cette première structure magnétique formant la partie inertielle du résonateur;
- une deuxième structure magnétique annulaire et périodique ayant un deuxième nombre entier N2 de périodes angulaires et définissant un second axe central, le deuxième nombre N2 étant différent du premier nombre N1, cette deuxième structure magnétique étant agencée de manière à pouvoir tourner relativement au châssis autour du second axe central qui a une position déterminée relativement à ce châssis.

Au moins une structure magnétique parmi les première et deuxième structures magnétiques a dans chacune de ses périodes angulaires un matériau aimanté. Le résonateur est agencé de manière qu'il a un mode de résonance dans lequel la première structure magnétique suit une trajectoire curviligne, notamment sensiblement circulaire, relativement au châssis autour du second axe central avec une fréquence de résonance F1 sans que cette première structure magnétique tourne sur elle-même relativement à ce châssis (en d'autres termes, la première structure magnétique subit une translation curviligne autour du second axe central). Les première et deuxième structures magnétiques sont agencées de manière à présenter entre elles une interaction magnétique telle que la rotation relative susmentionnée de la deuxième structure magnétique, par l'application d'un couple moteur dans une plage utile du couple moteur, excite ledit mode de résonance et de manière que la fréquence F2 de cette rotation relative de la deuxième structure magnétique et la fréquence de résonance F1 présentent entre elles un rapport R_{Fr} déterminé, soit R_{Fr} = F1/F2, qui est égal au deuxième nombre entier N2 divisé par la différence ΔN entre ce deuxième nombre N2 et le premier nombre N1, soit ΔN = N2-N1 et R_{Fr} = N2/ΔN. Dans une variante particulière, le matériau aimanté de ladite au moins une structure magnétique présente une aimantation axiale.

Dans un mode de réalisation principal, le résonateur comprend une structure élastique reliant la première structure au châssis, cette structure élastique étant agencée de manière que la première structure magnétique a une position de repos dans laquelle les premier et second axes centraux sont sensiblement confondus, et de manière à exercer une force de rappel (force centripète) sensiblement en direction du second axe central quel que soit la position angulaire de la première structure magnétique relativement à ce second axe central. Dans une variante préférée, la force de rappel de la structure élastique est prévue sensiblement isotrope et sensiblement proportionnelle à la distance entre les premier et second axes centraux. On obtient ainsi un système sensiblement isochrone.

Dans un mode de réalisation perfectionné, le dispositif régulateur de l'invention comprend en outre un système mécanique d'anti-décrochage de la synchronisation entre les première et deuxième structures magnétiques qui est formé par un engrenage planétaire avec une roue satellite munie d'une première denture et tournant à l'intérieur d'une couronne munie intérieurement d'une deuxième denture. La roue satellite est associée à la structure ayant le nombre inférieur de périodes angulaires parmi les première et deuxième structures magnétiques et la couronne est associée à l'autre structure ayant le nombre supérieur de périodes angulaires. Ensuite, la structure associée à la deuxième structure magnétique est solidaire en rotation de cette deuxième structure. Il est prévu que, au moins dans une zone supérieure de la plage utile du couple moteur dont la valeur supérieure définit la valeur maximale de cette plage utile, les première et deuxième dentures pénètrent au moins partiellement l'une dans l'autre. Ces première et deuxième dentures sont configurées et agencées l'une relativement à l'autre de manière que, dans ladite plage utile, elles ne se touchent pas, le couplage entre les première et deuxième structures magnétiques étant purement magnétique dans cette plage utile.

Dans une variante principale, le rapport R_{Z} entre le nombre Z1 de dents de la denture de la couronne et le nombre Z2 de dents de la denture de la roue satellite est égal au rapport R_{M}* entre le nombre supérieur de périodes angulaires et le nombre inférieur de périodes angulaires.

Selon une variante particulière du mode de réalisation perfectionné susmentionné, ladite plage utile du couple moteur est une première plage utile de couplage purement magnétique des première et deuxième structures magnétiques, la valeur maximale de cette première plage utile étant inférieure à une valeur de décrochage de ce couplage purement magnétique. Le dispositif régulateur fonctionne en outre dans une deuxième plage utile du couple moteur, supérieure à la première plage utile et contiguë à cette dernière, correspondant à une plage utile de couplage magnéto-mécanique dans laquelle les première et deuxième dentures engrènent l'une avec l'autre de manière que l'une exerce un couple d'entraînement mécanique sur l'autre. Les première et deuxième dentures sont configurées et agencées l'une relativement à l'autre de manière que, au moins dans une zone inférieure de la deuxième plage utile dont la valeur inférieure définit la valeur minimale de cette deuxième plage utile, ces première et deuxième dentures présentent un jeu radial permettant une augmentation de l'amplitude de la translation curviligne générée dans ledit du mode de résonance excité lors d'une augmentation du couple moteur. Finalement, la structure élastique est agencée de manière qu'elle présente une déformation substantiellement élastique, de préférence purement élastique, dans les première et deuxième plages utiles du couple moteur appliqué au dispositif régulateur.

Selon une variante améliorée, la première denture de la roue satellite est agencée relativement à la deuxième denture de la couronne de manière que, dans une zone de la plage utile du couple moteur dans laquelle ces première et deuxième dentures présentent une pénétration sans contact, des dents de la première denture situées dans des espaces correspondants de la deuxième denture, dans la zone où les première et deuxième dentures sont radialement le plus proche, sont sensiblement centrées à l'intérieur d'un jeu tangentiel total donné pour un décalage angulaire relatif milieu, entre les périodes angulaires de la première structure magnétique et les périodes angulaires de la deuxième structure magnétique, à l'intérieur d'une plage de décalage angulaire relatif définie par une variation du couple moteur dans ladite plage utile.

L'invention concerne aussi un mouvement horloger mécanique comprenant un dispositif régulateur selon l'invention, un rouage compteur cadencé par ce dispositif régulateur et un dispositif moteur entraînant le rouage compteur et entretenant un mode de résonance du dispositif régulateur.

D'autres caractéristiques particulières de l'invention seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 montre en perspective un premier mode de réalisation d'un dispositif régulateur selon l'invention;
- La Figure 2 montre en plan le résonateur du dispositif régulateur de la Figure 1 ;
- Les Figures 3A à 3D sont quatre représentations schématiques de respectivement quatre positions successives du dispositif régulateur dans une variante du premier mode de réalisation;
- La Figure 4 montre en perspective un deuxième mode de réalisation d'un dispositif régulateur selon l'invention;
- La Figure 5 est une vue de dessus du dispositif régulateur de la Figure 4;
- La Figure 6 est une coupe selon la ligne VI-VI de la Figure 5;
- La Figure 7 est une vue schématique en plan d'une première variante d'un troisième mode de réalisation ;
- La Figure 8 est une vue schématique en plan d'une deuxième variante du troisième mode de réalisation ;
- La Figure 9 est une vue schématique en plan d'une troisième variante du troisième mode de réalisation ;
- La Figure 10 est une vue schématique en plan d'une quatrième variante du troisième mode de réalisation ;
- La Figure 11 montre en perspective un quatrième mode de réalisation d'un dispositif régulateur selon l'invention ;
- La Figure 12 est une coupe de la Figure 11 selon un plan de coupe comprenant l'axe de rotation central ;
- Les Figures 13A et 13B montrent le dispositif régulateur du quatrième mode de réalisation dans deux positions successives.

### Description détaillée de l'invention

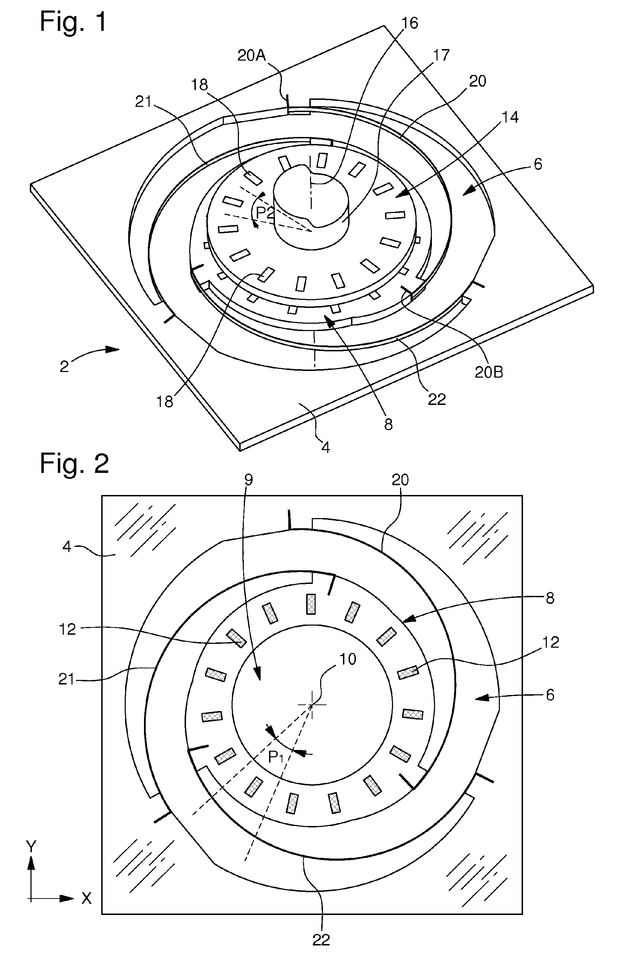

A l'aide des Figures 1, 2 et 3A à 3D, on décrira un premier mode de réalisation de l'invention. Le dispositif régulateur 2 comprend :
- un châssis 4;
- un résonateur 6 fixé au châssis et comprenant une première structure magnétique annulaire et périodique 8 ayant un premier nombre entier N1 de périodes angulaires P1 et définissant un premier axe central 10, cette première structure magnétique formant la partie inertielle du résonateur;
- une deuxième structure magnétique annulaire et périodique 14 ayant un deuxième nombre entier N2 de périodes angulaires P2 et définissant un second axe central 16, le deuxième nombre N2 étant différent du premier nombre N1.

De manière générale, N1·P1 = N2·P2 = 360°et donc N1/N2 = P2/P1. Dans la variante représentée aux Figures 1 et 2, N1 = 15 et N2 = 14. La deuxième structure magnétique 14 est agencée de manière à pouvoir tourner relativement au châssis 4 autour du second axe central 16 qui a une position fixe et déterminée relativement à ce châssis. La première structure magnétique 8 comprend un support amagnétique annulaire ayant une ouverture centrale 9 et un premier nombre N1 d'aimants 12 répartis régulièrement de manière circulaire sur ou dans ce support. La deuxième structure magnétique 14 est supportée par un disque amagnétique relié à un arbre 17 et comprend un deuxième nombre N2 d'aimants 18 sont répartis régulièrement de manière circulaire sur ou dans ce disque.

Dans ce premier mode de réalisation, les première et deuxième structures magnétiques sont agencées dans deux plans généraux différents qui sont parallèles. Ensuite, la pluralité d'aimants 12 et la pluralité d'aimants 18 présentent une aimantation axiale et sont agencés en répulsion les uns relativement aux autres.

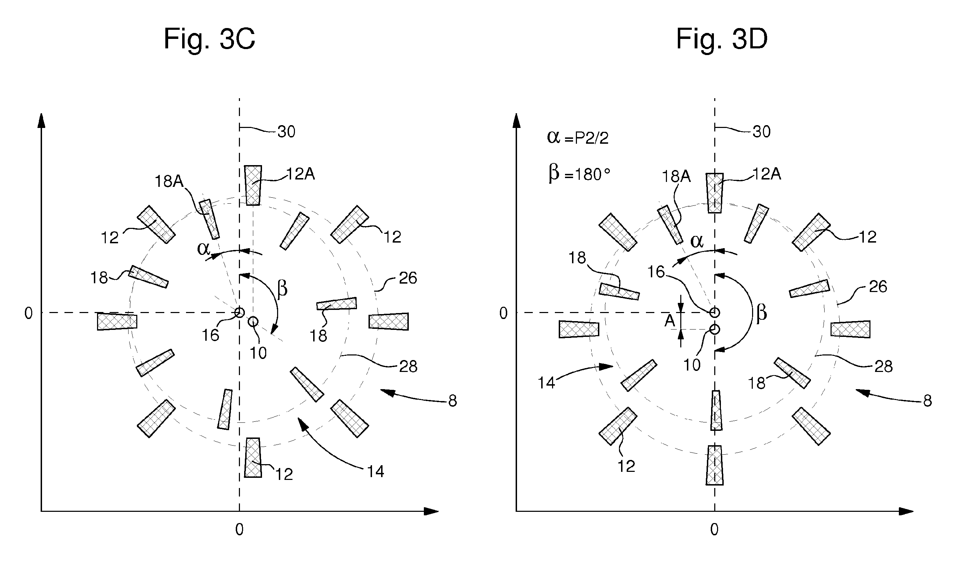

Le résonateur 6 comprend une structure élastique, formée dans la variante représentée par trois lames élastiques 20, 21 & 22, qui relie la première structure magnétique 8 au châssis 4. On peut dire que la structure 8 est suspendue au châssis par l'intermédiaire de la structure élastique. Chaque lame élastique a une première extrémité pliée 20A qui est ancrée dans une fente du châssis 4 et une seconde extrémité pliée 20B qui est ancrée dans une fente du support annulaire de la structure magnétique résonante 8. Cette structure élastique est agencée de manière que la première structure magnétique a une position de repos dans laquelle les premier et second axes centraux 10 et 16 sont confondus ou virtuellement confondus, et de manière à exercer une force de rappel sensiblement en direction du second axe central 16 quel que soit la position angulaire de la première structure magnétique relativement à ce second axe central. De préférence, la force de rappel de la structure élastique est sensiblement proportionnelle à la distance entre les premier et second axes centraux, c'est-à-dire à l'amplitude A du mouvement de résonance circulaire autour de l'axe central 16 (voir Figure 3D).

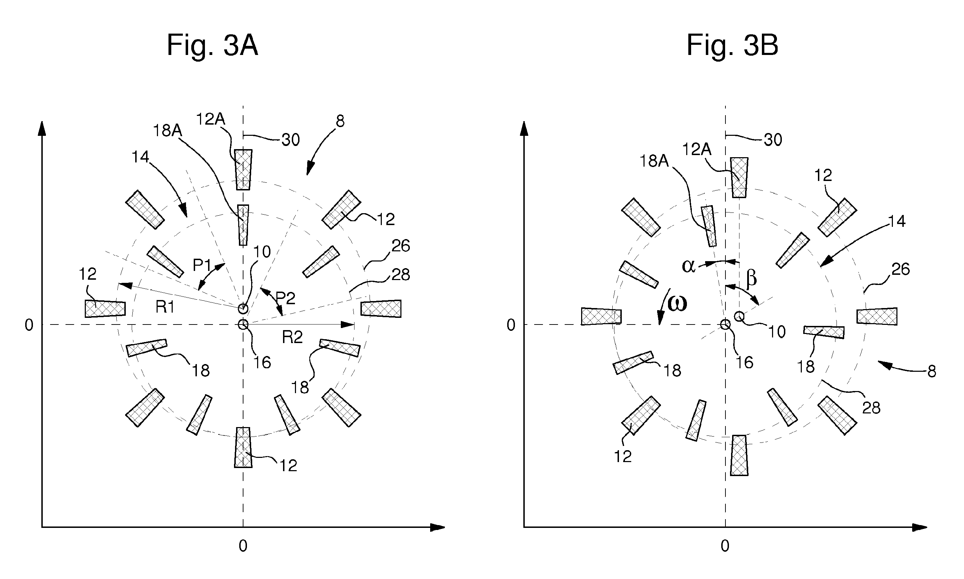

Comme représenté schématiquement aux Figures 3A à 3D qui montrent quatre positions angulaires correspondantes des première et deuxième structures magnétiques lors du mouvement de résonance prévu, le résonateur 6 est agencé de manière qu'il a un mode de résonance dans lequel la première structure magnétique subit, relativement au châssis, une translation sensiblement circulaire autour du second axe central 16 avec une fréquence de résonance F1 donnée. Les première et deuxième structures magnétiques sont agencées de manière que leurs deux pluralités d'aimants respectives présentent entre elles une interaction magnétique telle qu'une rotation relative de la deuxième structure magnétique autour du second axe central 16, par l'application d'un couple moteur dans une plage utile du couple moteur pour un fonctionnement normal du mouvement horloger incorporant un tel dispositif régulateur, excite le mode de résonance susmentionné et de manière que la fréquence F2 de la rotation relative de la deuxième structure magnétique et la fréquence de résonance F1 présentent entre elles, dans la plage utile du couple moteur susmentionnée, un rapport R_{Fr} déterminé, soit R_{Fr} = F1/F2. Ce rapport R_{Fr} est égal au deuxième nombre entier N2 divisé par la différence ΔN entre le deuxième nombre entier N2 et le premier nombre entier N1, soit ΔN = N2-N1 et R_{Fr} = N2/ΔN.

Dans les deux variantes représentées aux Figures 1,2 et 3A à 3D, la différence en valeur absolue |ΔN| entre le deuxième nombre N2 et le premier nombre N1 est égal à un, soit |ΔN| = 1. Ensuite, de préférence, comme c'est le cas dans ces deux variantes, le rapport R_{Fr} est supérieur à cinq, soit R_{Fr} > 5.

On remarquera que le couple moteur est de préférence fourni à la deuxième structure magnétique 14 par l'intermédiaire de l'arbre 17. Cependant, dans une variante de réalisation d'un mouvement horloger incorporant un tel dispositif régulateur, la structure magnétique 14 est fixe et c'est le châssis 4 qui est entraîné en rotation par un couple moteur autour de l'axe central 16. On notera que, dans une autre variante, les deux structures peuvent tourner autour de l'axe 16, la différence des couples appliqués respectivement au châssis et à la deuxième structure magnétique définissant le couple utile fourni au dispositif régulateur. Quelle que soit la variante considérée, on peut cependant parler d'une rotation de la structure magnétique 14 relativement au châssis 4 et donc d'une rotation relative de cette structure magnétique 14, et nommer ainsi cette dernière 'une structure magnétique tournante'.

Le dispositif régulateur selon l'invention est notamment remarquable par le fait qu'il incorpore un multiplicateur cycloïdal, respectivement un réducteur cycloïdal. Plus précisément, comme représenté schématiquement aux Figures 3A à 3D, la première structure magnétique 8 du résonateur et la deuxième structure magnétique 14 sont configurées et agencées l'une relativement à l'autre de manière que la structure magnétique résonante définit un premier mobile d'un engrenage magnétique cycloïdal alors que la structure magnétique d'activation du mouvement de résonance (ou structure magnétique d'excitation du mode de résonnance, nommée aussi par la suite structure magnétique tournante) définit un second mobile de cet engrenage magnétique cycloïdal. Les aimants de la structure magnétique résonante suivent des trajectoires cycloïdales lorsque les aimants de la structure magnétique tournante subissent une rotation, relativement au châssis de la structure magnétique résonante, autour de l'axe central de cette structure magnétique tournante. Pour ce faire, l'invention sélectionne un engrenage cycloïdal particulier dans lequel le premier mobile associé au résonateur subit un mouvement de résonance à deux degrés de liberté en suivant généralement une trajectoire curviligne, de préférence sensiblement circulaire, autour de l'axe central 16 du second mobile sans tourner sur lui-même relativement au châssis et dans lequel le second mobile sert à exciter et entretenir le mode de résonance correspondant, c'est-à-dire à engendrer le mouvement de résonance en actionnant le premier mobile relativement au châssis auquel il est relié par une structure élastique. En d'autres termes, ce premier mobile subit, lorsque le mouvement de résonance est activé et stabilisé, une translation curviligne autour de l'axe 16, dont la position est fixe et déterminée relativement au châssis, et de préférence une translation sensiblement circulaire et centrée sur cet axe 16. Aux Figures 3A à 3D, on a choisi un cas optimal avec une translation circulaire. On peut donc parler d'un dispositif régulateur à mouvement de résonance cycloïdal ou plus courtement d'un dispositif régulateur cycloïdal.

Par analogie au cas mécanique, les deux structures magnétiques présentent, lorsque ledit mode de résonance est activé et que l'interaction magnétique entre ces deux structures est suffisante pour assurer un couplage magnétique de synchronisation entre la rotation relative susmentionnée de la deuxième structure magnétique et la translation sensiblement circulaire de la première structure magnétique, un engrènement magnétique de sorte qu'un cercle primitif 26 de la première structure magnétique 8 roule virtuellement sans glissement sur un cercle primitif correspondant 28 de la deuxième structure magnétique 14. Par synchronisation, on comprend ici de manière générale un rapport déterminé et sensiblement fixe entre les fréquences de rotation en présence, soit entre la fréquence de résonance et la fréquence de rotation de la deuxième structure magnétique. Les cercles primitifs sont des cercles géométriques définissant un chemin de roulement virtuel. Le rapport R des rayons respectifs R1 et R2 des cercles primitifs 26 et 28 est fixé par le rapport R_{M} des nombres d'aimants respectifs N1 et N2 des deux structures magnétiques, soit R = R1/R2 = R_{M} = N1/N2 = P2/P1. D'autre part, dans le cas spécifique de l'engrenage cycloïdal prévu pour l'invention, la fréquence F1 de la translation circulaire autour de l'axe 16, correspondant à la fréquence de résonance du résonateur, est une fonction de la fréquence de rotation F2 de la deuxième structure magnétique autour de cet axe 16 relativement au châssis, cette fonction étant donnée par la relation mathématique F2·N2 = F1·(N2-N1). On peut déduire de cette relation mathématique le rapport R_{Fr} des fréquences F1 et F2 donné par R_{Fr} = F1/F2 = N2/ΔN où ΔN = N2-N1. On obtient ainsi la relation mathématique suivante entre les rapports R_{Fr} et R, respectivement R_{M} : R_{Fr} = 1/(1-R) = 1/(1-R_{M}). On constate donc que la fréquence de rotation de la deuxième structure magnétique est déterminée par la fréquence de résonance du résonateur ; ce qui permet de cadencer la marche d'un mouvement horloger muni d'un rouage compteur couplé à la partie du dispositif régulateur qui définit une roue d'échappement.

On notera que le rapport des fréquences peut être positif ou négatif selon que le rapport R_{M} des nombres de périodes angulaires N1 et N2 est inférieur ou supérieur à un. Un rapport R_{Fr} négatif indique que le sens de la translation circulaire de la structure magnétique résonante est inversé par rapport au sens de la rotation relative de la structure magnétique d'excitation du mode de résonance prévu (structure magnétique tournante); ce qui est le cas dans l'exemple représenté aux Figures 3A à 3D où la structure magnétique résonante 8 a un plus grand nombre d'aimants que la structure magnétique tournante 14. On remarquera que les aimants peuvent, dans diverses variantes, être agencés avec des positions radiales différentes sans que le rapport R des rayons respectifs R1 et R2 des cercles primitifs 26 et 28 ne varie. L'homme du métier optimisera ces positions radiales pour optimiser le couplage magnétique entre les deux structures magnétiques dans la plage utile du couple moteur appliqué au dispositif régulateur de l'invention. Par structure magnétique, on comprend premièrement les parties ou éléments magnétiques (aimants ou matériaux à haute perméabilité magnétique intervenant dans l'interaction magnétique en question) qui forment la structure magnétique, le support de ces parties ou éléments magnétiques étant matériellement nécessaire mais secondaire pour le couplage magnétique. Par 'structure magnétique annulaire', on comprend donc un agencement des parties ou éléments magnétiques de manière annulaire, en particulier circulaire. Aux Figures 3A à 3D ont été représentés seulement les aimants des deux structures magnétiques.

A la Figure 3A, on part d'une position relative dans laquelle deux aimants respectifs 12A et 18A des deux structures magnétiques 8 et 14 sont alignés sur l'axe vertical 30 ainsi que les deux axes centraux respectifs 10 et 16. Dans la variante représentée aux Figures 3A-3D, la structure 8 comprend huit aimants 12 alors que la structure 14 en comprend sept aimants 18. Comme montré à la Figure 1, les deux structures magnétiques sont agencées dans des plans généraux parallèles et distants l'un de l'autre, les pluralités d'aimants 12 et 18 ayant une aimantation axiale et étant agencés en répulsion. On comprend que les deux aimants alignés verticalement se repoussent et que les aimants dans la zone diamétralement opposée pénètrent l'un entre deux autres et se repoussent moins fort, voire s'attirent selon l'agencement prévu. On constate donc qu'il y a une force magnétique radiale avec une différence d'aimants |ΔN| = 1 qui engendre un décentrage initial de l'axe 10 relativement à l'axe 16 dans un état de repos du dispositif régulateur et donc au démarrage de la rotation relative de la structure magnétique 14. Un tel décentrage peut permettre un couplage magnétique suffisant entre les deux structures magnétiques pour exciter le mode de résonance au démarrage. On remarquera que le coefficient d'élasticité de la structure élastique et la masse inertielle du résonateur déterminent essentiellement la fréquence de résonance. Lorsqu'il y a résonance, la force de rappel de la structure élastique correspond à la force centripète, nécessaire à engendrer la translation circulaire de la structure 8, en l'absence d'autres forces parasites; de sorte qu'une force magnétique radiale n'est alors pas nécessaire. L'amplitude du mouvement de résonance dépend du couple moteur appliqué tout comme la valeur de la force de rappel engendrant la force centripète, mais ces deux forces restent égales lorsqu'il y a résonance en l'absence d'autres forces parasites. On peut ainsi prévoir un agencement spécifique des deux structures magnétiques pour lequel la force magnétique radiale s'annule lors d'un mouvement de résonance au moins pour une valeur du couple moteur dans la plage utile prévue. De préférence, cet agencement spécifique est tel que la force magnétique radiale a une relativement faible valeur, en particulier sensiblement zéro, pour toute cette plage utile du couple moteur, de manière à obtenir un fonctionnement du dispositif régulateur le plus isochrone possible dans toute cette plage utile. On remarquera encore qu'une augmentation de l'amplitude A (distance entre les axes centraux 10 et 16) engendre une plus grande pénétration des aimants des deux structures magnétiques.

Aux Figures 3B et 3C, on a représenté deux positions relatives des deux structures magnétiques lors de l'excitation du mode de résonance prévu qui engendre une translation circulaire de la structure magnétique résonante 8 autour de l'axe central 16 de la structure magnétique 14. Lorsque cette structure 14 tourne dans le sens antihoraire d'un angle α relativement au châssis de la structure 8, cette dernière subit une translation circulaire dans le sens horaire sur une distance angulaire β. Ainsi, l'axe central 10 tourne autour de l'axe central 16 en suivant une trajectoire circulaire. L'angle β est supérieur à l'angle α et proportionnel à celui-ci. Ces angles α et β sont proportionnels aux deux fréquences F1 et F2 car β / α = R_{Fr} = F1/F2 = N2 / ΔN = 7. On constate que l'aimant 12A considéré et l'axe central 10 restent alignés sur une droite verticale. A la Figure 3D, on voit que, lorsque la structure 14 a tourné d'une demi-période P2 (α = P2/2), l'angle β est égal à 180° (β = 180°). Pour une rotation de la structure 14 correspondant à sa période angulaire P2, l'axe central 10 de structure résonante effectue un tour complet (cas ΔN = 1).

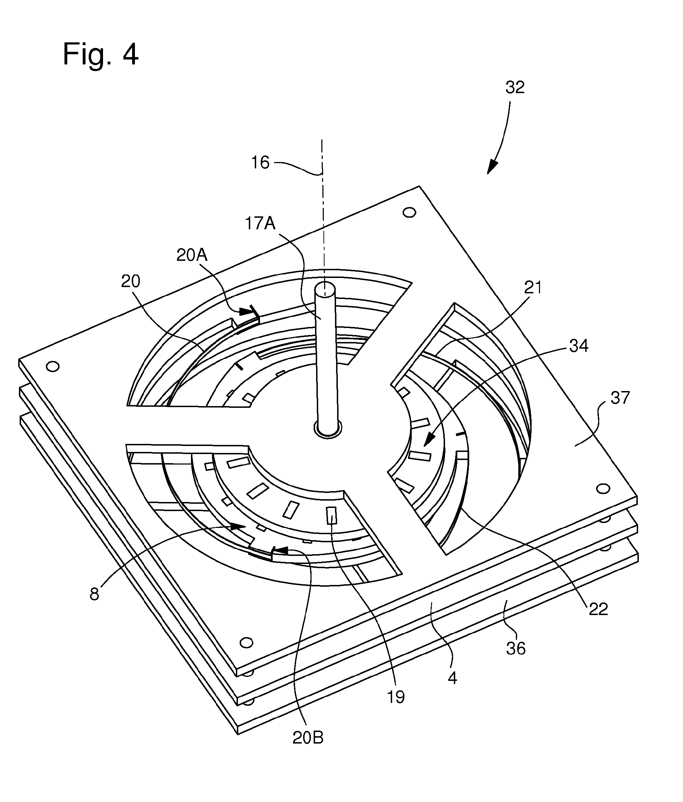

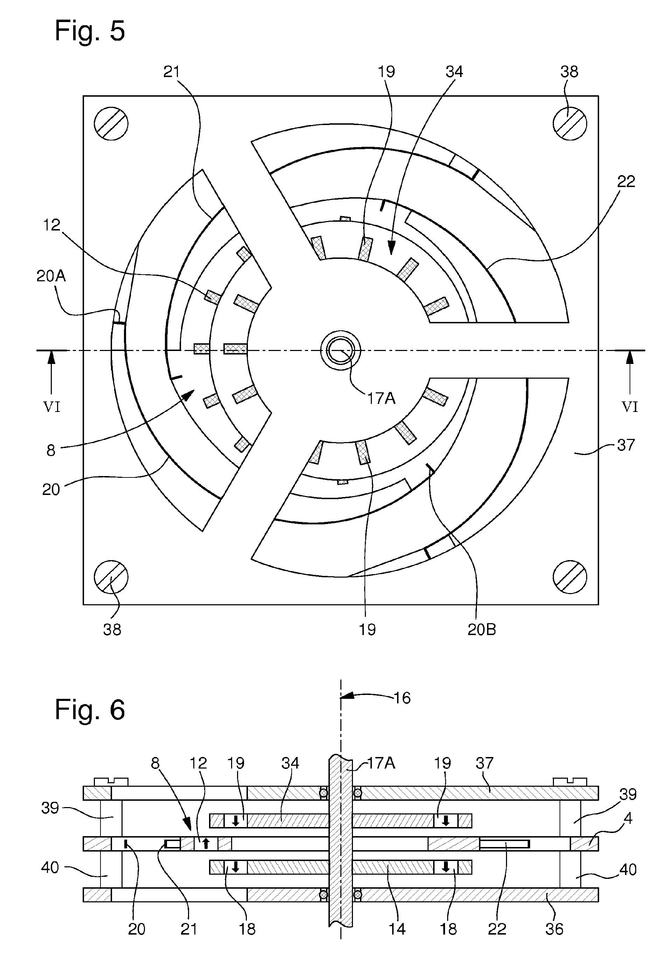

Aux Figures 4 à 6 est représenté un deuxième mode de réalisation. Le dispositif régulateur 32 reprend les éléments du premier mode de réalisation qui ne seront pas à nouveau décrits ici. Ce dispositif régulateur 32 fonctionne de manière semblable au dispositif 2 décrit précédemment. Il se distingue de ce dernier par le fait qu'il comprend une troisième structure magnétique 34 ayant une configuration semblable à la deuxième structure magnétique 14 et solidaire de celle-ci. Les deux structures magnétiques semblables 14 et 34 sont alignées selon la direction définie par le second axe central 16 et agencées de part et d'autre de la structure magnétique 8 à une sensiblement même distance de cette dernière. La structure magnétique résonante 8 et la structure élastique la reliant à la plaque 4 du châssis sont identiques à celles décrites précédemment. Le positionnement de la structure magnétique résonante relativement à la structure magnétique 14, respectivement 34 est également identique à celui du premier mode de réalisation. A la Figure 5, le résonateur 8 est activé et la structure 8 est dans une position de la trajectoire circulaire qu'elle suit dans le mode de résonance excité. Le châssis comprend une plaque inférieure 36 et une plaque supérieure 37 dans lesquels l'arbre 17A est monté rotatif autour de l'axe central 16 au moyen de deux roulements à billes. Cet arbre 17A peut dans une variante être pivoté dans des paliers classiques ou dans des paliers magnétiques. Les plaques 4, 36 et 37 sont fixées par des vis 38 et maintenues fixement dans des plans généraux parallèles par des entretoises 39 et 40 traversées par les vis. La représentation des plaques et leur assemblage est schématique dans les figures, chacune de ces plaques pouvant former une platine ou un pont d'un mouvement horloger dans lequel le dispositif régulateur 32 est agencé.

Les structures magnétiques 14 et 34 sont fixées à l'arbre 17A et entraînées simultanément en rotation par un couple moteur. Ces deux structures semblables ont leurs aimants 18 et 19 alignés axialement et présentant une aimantation axiale de même sens alors que les aimants 12 de la structure magnétique résonante 8 ont une aimantation axiale de sens inversé. Ainsi, chacune des structures magnétiques 14 et 34 a ses aimants agencés en répulsion relativement aux aimants de la structure intermédiaire 8. Ceci constitue un avantage majeur de ce deuxième mode de réalisation car les forces magnétiques axiales subies par la structure magnétique résonante 8 s'annulent globalement. Dans une variante, les deux structures semblables sont montées sur deux arbres coaxiaux et au moins l'un de ces arbres reçoit un couple moteur. Dans une première variante particulière, un premier arbre reçoit un couple moteur alors que le second arbre est entraîné en rotation par la structure magnétique résonante à la même fréquence que la fréquence de rotation du premier arbre. Dans une deuxième variante particulière, les deux arbres reçoivent chacun un couple moteur pour exciter le mode de résonance et assurer son entretien. Le résonateur assure la synchronisation des fréquences de rotation des deux arbres.

Dans un autre mode de réalisation non représenté, c'est la structure magnétique résonante 8 qui est doublée, c'est-à-dire que le résonateur comprend deux structures magnétiques résonantes semblables et solidaires en mouvement. Les deux structures magnétiques résonantes sont alignées selon la direction axiale et agencées de part et d'autre d'une structure magnétique d'excitation du mode de résonance prévu (semblable à la structure 14 décrite précédemment) à une sensiblement même distance de cette dernière. Les deux structures magnétiques résonantes peuvent être reliées au châssis par une même structure élastique médiane ou par deux structures élastiques s'étendant respectivement dans les deux plans généraux de ces deux structures magnétiques résonantes. Dans une variante de ce dernier cas, les deux structures magnétiques résonantes sont indépendantes et agencées pour avoir une fréquence de résonance sensiblement identique.

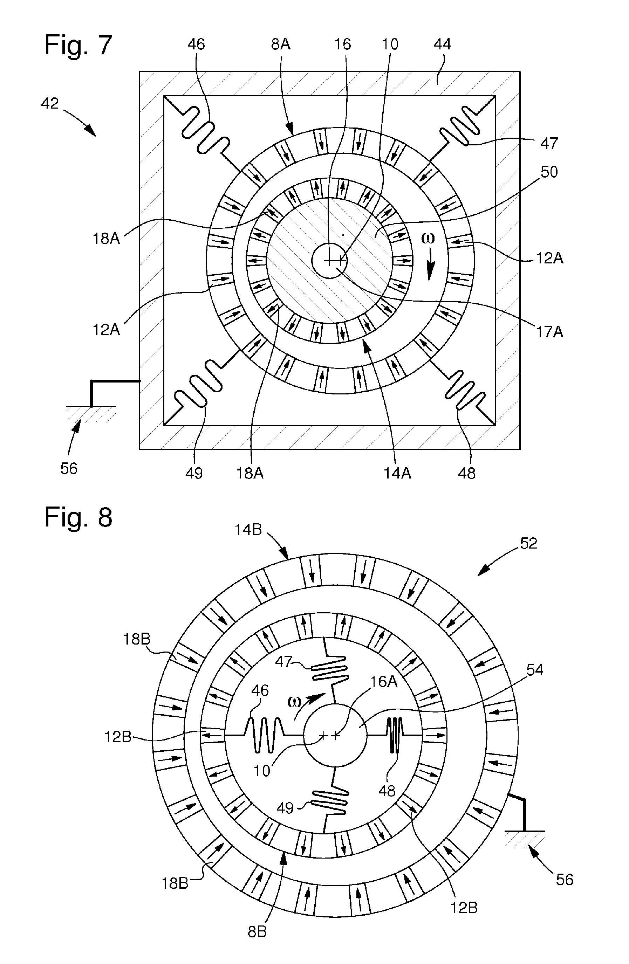

A l'aide des Figures 7 à 10, on décrira ci-après quatre variantes d'un troisième mode de réalisation d'un dispositif régulateur selon l'invention. On notera d'emblée que la première variante correspond dans son principe de fonctionnement aux premier et deuxième modes de réalisation décrits précédemment dans la variante où le châssis est fixe relativement au mouvement horloger. Ainsi, les explications générales données pour le fonctionnement du dispositif régulateur et les diverses relations mathématiques s'appliquent également à ce troisième mode de réalisation.

Le troisième mode de réalisation se distingue essentiellement du premier mode de réalisation en ce que les première et deuxième structures magnétiques du dispositif régulateur sont agencées dans un même plan général, l'une de ces première et deuxième structures magnétiques étant située à l'intérieur de l'autre; et en ce que le matériau aimanté formant au moins une des deux structures magnétiques présente une aimantation radiale. Dans les variantes décrites ci-après, les deux structures magnétiques comprennent chacune une pluralité d'aimants ayant une aimantation radiale. Dans les première et deuxième variantes, les aimants d'une structure sont agencés en répulsion des aimants de l'autre structure. Dans les troisième et quatrième variantes, les aimants d'une structure magnétique sont agencés en attraction des aimants de l'autre structure magnétique. Dans le premier cas, le mouvement circulaire de la structure magnétique résonante est tel que les aimants de celle-ci suivent des trajectoires cycloïdales de manière que l'aimant ou les deux aimants de cette structure magnétique résonante qui sont radialement le plus proche des aimants de la structure magnétique tournante (subissant une rotation relativement au châssis) est/sont substantiellement déphasé(s). Dans le second cas, l'aimant ou les deux aimants de la structure magnétique résonante qui est/sont radialement le plus proche des aimants de la structure magnétique tournante est/sont sensiblement aligné(s) à ceux-ci.

On remarquera encore que dans les variantes décrites ci-après, la structure magnétique intérieure a dix-huit aimants alors que la structure magnétique extérieure a vingt aimants. On a donc une différence d'aimants ΔN = +/- 2. Il en résulte que la fréquence de résonance F1 = +/- F2·N2 / 2, où F2 et N2 sont respectivement la fréquence de rotation et le nombre d'aimants de la structure magnétique tournante, selon les explications qui ont été données précédemment. Ainsi, lorsque la structure magnétique tournante a effectué une rotation correspondante à sa période magnétique angulaire P2, la structure magnétique résonante a effectué une translation circulaire d'un angle de +/-180° car P2·N2 = 360°. Etant donné que, avec une différence d'aimants en valeur absolue supérieure à un, soit |ΔN| > 1, il n'y a globalement pas de force magnétique radiale lorsque les axes centraux des deux structures magnétiques sont confondus, il est prévu d'agencer un moyen mécanique pour décentrer initialement la structure magnétique résonante relativement à la structure magnétique tournante, de manière à engendrer un couplage magnétique initial entre les deux structures magnétiques qui soit suffisant pour permettre le démarrage du dispositif régulateur par la rotation relative de la structure magnétique tournante et ainsi à exciter le mode de résonance prévu, ce dernier étant ensuite entretenu par cette rotation relative de cette structure magnétique tournante dans la plage utile du couple moteur. Dans d'autres variantes du troisième mode de réalisation, correspondantes aux quatre variantes susmentionnées, il est prévu une différence d'aimants en valeur absolue égale à un, soit |ΔN| = 1, les aimants étant agencés soit en répulsion, soit en attraction. On remarquera finalement que les diverses variantes du troisième mode décrites par la suite peuvent également s'appliquer aux autres modes de réalisation de l'invention, en particulier aux autres modes de réalisation donnés dans la présente description de l'invention, c'est-à-dire à des modes de réalisation où la structure magnétique résonante et la structure magnétique tournante sont agencés dans des plans généraux différents, en particulier avec les aimants de ces structures magnétiques présentant une aimantation axiale.

Le dispositif régulateur 42 de la Figure 7 comprend :
- un cadre 44 formant un châssis solidaire du mouvement horloger dans lequel le dispositif régulateur est incorporé;
- une structure magnétique résonante 8A de forme annulaire et comprenant à sa périphérie intérieure une pluralité d'aimants 12A agencés circulairement et définissant un axe central 10;
- un mobile tournant comprenant à sa périphérie extérieure une pluralité d'aimants 18A agencés circulairement et définissant une structure magnétique tournante 14A, ce mobile étant agencé à l'intérieur de la structure 8A et comprenant un disque amagnétique central 50 monté sur un arbre 17A dont l'axe de rotation est confondu avec l'axe central 16 de la structure magnétique tournante;
- une structure élastique formée de quatre ressorts identiques 46,47,48 & 49 qui sont agencés par paires sur deux axes géométriques orthogonaux (précisément lorsque les axes centraux 10 et 16A sont confondus), les ancrages de chaque paire de ressorts sur le châssis et sur la structure magnétique résonante étant diamétralement opposés.

La structure magnétique 14A est entraînée en rotation par un couple moteur avec une vitesse angulaire ω dépendante de la fréquence de résonance lorsque le mode de résonance est excité et stabilisé. Elle forme ainsi une roue d'échappement du dispositif régulateur 42 à laquelle est appliqué le couple moteur fourni. Pour avoir une force de rappel isotrope générée par la structure élastique, la distance entre les deux ancrages d'un ressort est identique pour les quatre ressorts lorsque les axes centraux 10 et 16 sont confondus. Ces ressorts sont formés chacun par une lame élastique présentant en plan un profil sinueux. Diverses variantes peuvent être prévues par l'homme du métier.

Le dispositif régulateur 52 de la Figure 8 comprend :
- une structure magnétique 14B de forme annulaire et comprenant à sa périphérie intérieure une pluralité d'aimants 18B agencés circulairement et définissant un axe central 16A, cette structure magnétique étant solidaire du mouvement horloger dans lequel le dispositif régulateur est incorporé (schématisé par un lien matériel à une masse 56);
- un châssis formé par un arbre central 54 dont l'axe de rotation est confondu avec l'axe central 16A et agencé à l'intérieur de la structure 14B;
- une structure magnétique résonante 8B de forme annulaire et comprenant à sa périphérie extérieure une pluralité d'aimants 12B agencés circulairement et définissant un axe central 10, cette structure magnétique résonante étant agencée à l'intérieur de la structure 14B et l'arbre central 54 étant situé à l'intérieur de la structure 8B;
- une structure élastique formée de quatre ressorts identiques 46,47,48 & 49 qui sont agencés par paires sur deux axes géométriques orthogonaux (précisément lorsque les axes centraux 10 et 16A sont confondus), les ancrages de chaque paire de ressorts sur le châssis et sur la structure magnétique résonante étant diamétralement opposés.

L'arbre central 54 est entraîné en rotation par un couple moteur avec une vitesse angulaire ω dépendante de la fréquence de résonance lorsque le mode de résonance est excité et stabilisé. Le châssis forme ainsi une roue d'échappement auquel est appliqué le couple moteur fourni au dispositif régulateur 52. Pour avoir une force de rappel isotrope générée par la structure élastique, la distance entre les deux ancrages d'un ressort est identique pour les quatre ressorts lorsque les axes centraux 10 et 16A sont confondus. Ces ressorts sont formés chacun par une lame élastique présentant en plan un profil sinueux. Diverses variantes peuvent être prévues par l'homme du métier. On notera que, bien que fixe relativement au mouvement horloger, la structure magnétique 14B présente relativement au châssis 54 une rotation relative autour de son axe central 16A, lequel a une position fixe déterminée relativement au châssis. Ainsi, dans la terminologie utilisée, la structure 14B définit une structure magnétique tournante dans le référentiel lié au châssis.

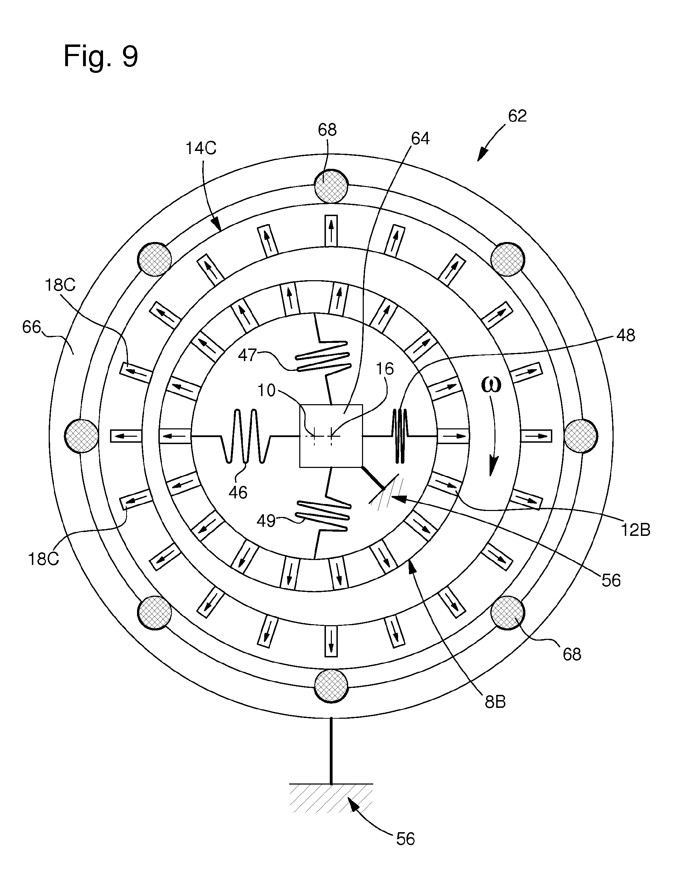

Le dispositif régulateur 62 de la Figure 9 comprend :
- un châssis solidaire du mouvement horloger dans lequel le dispositif régulateur est incorporé (schématisé par un lien matériel à une masse 56), ce châssis étant formé par un bloc central 64 et par un support extérieur 66 présentant une ouverture circulaire;
- une structure magnétique tournante 14C de forme annulaire et comprenant à sa périphérie intérieure une pluralité d'aimants 18C agencés circulairement et définissant un axe central 16, cette structure 14C présentant une surface extérieure circulaire et tournant autour de son axe central 16 à l'intérieur du support extérieur 66 qui la guide en rotation par un roulement à billes 68;
- une structure magnétique résonante 8B de forme annulaire et comprenant à sa périphérie extérieure une pluralité d'aimants 12B agencés circulairement et définissant un axe central 10, cette structure 8B étant agencée à l'intérieur de la structure 14C et le bloc central 64 étant situé à l'intérieur de cette structure 8B;
- une structure élastique formée de quatre ressorts identiques 46,47,48 & 49 qui sont agencés par paires sur deux axes géométriques orthogonaux (précisément lorsque les axes centraux 10 et 16A sont confondus), les ancrages de chaque paire de ressorts sur le châssis et sur la structure magnétique résonante étant diamétralement opposés.

La structure magnétique 14C est entraînée en rotation par un couple moteur avec une vitesse angulaire ω dépendante de la fréquence de résonance lorsque le mode de résonance est excité et stabilisé. Elle forme ainsi une roue d'échappement du dispositif régulateur 62. Les ressorts 46,47,48 & 49 sont semblables à ceux de la variante précédente (Figure 8) et agencés de manière similaire.

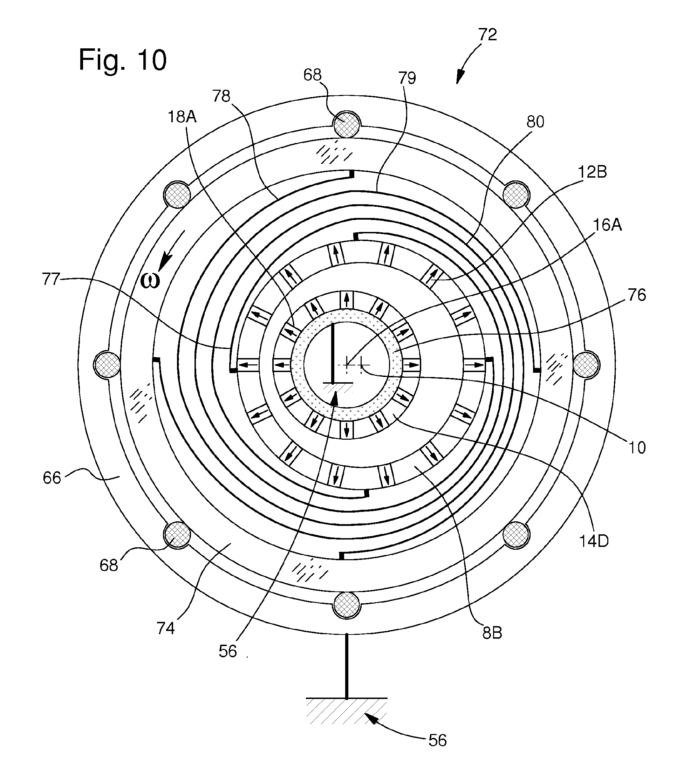

Le dispositif régulateur 72 de la Figure 10 comprend :
- une structure magnétique centrale 14D comprenant à sa périphérie extérieure une pluralité d'aimants 18A agencés circulairement et définissant un axe central 16A, cette structure magnétique centrale étant solidaire du mouvement horloger dans lequel le dispositif régulateur est incorporé (schématisé par un lien matériel à une masse 56);
- un support extérieur 66 présentant une ouverture circulaire et également solidaire du mouvement horloger dans lequel le dispositif régulateur est incorporé;
- un châssis formé par un support annulaire tournant 74 dont l'axe de rotation est confondu avec l'axe central 16A et agencé à l'intérieur du support extérieur 66, ce support annulaire 74 présentant une surface extérieure circulaire et tournant à l'intérieur du support extérieur 66 qui le guide en rotation par un roulement à billes 68;
- une structure magnétique résonante 8B de forme annulaire et comprenant à sa périphérie intérieure une pluralité d'aimants 12B agencés circulairement et définissant un axe central 10, cette structure 8B étant agencée à l'intérieur du support annulaire tournant 74 et la structure magnétique centrale 14D étant située à l'intérieur de cette structure 8B;
- une structure élastique formée de quatre lames élastiques en spirale 77,78,79 & 80 qui sont identiques et agencées entre la structure magnétique résonante 8B et le support annulaire tournant 74 auxquels ces quatre lames élastiques sont respectivement fixées à leurs deux extrémités.

Le support annulaire tournant 74 est entraîné en rotation par un couple moteur avec une vitesse angulaire ω dépendante de la fréquence de résonance lorsque le mode de résonance est excité et stabilisé. Il forme ainsi une roue d'échappement du dispositif régulateur 72. Les quatre lames élastiques en spirale sont décalées angulairement de 90° et elles sont imbriquées sans se toucher. Dans la variante représentée, chaque lame élastique définit sensiblement une spire (elle s'étend sensiblement sur une distance angulaire de 360°). Ainsi les deux ancrages de chaque lame élastique respectivement à la structure magnétique résonante et au support annulaire tournant sont sensiblement alignés selon une direction radiale de ce support annulaire tournant. On remarquera que les lames élastiques en spiral peuvent avoir diverses longueurs, notamment faire un tour et demi (540°) de sorte les deux ancrages de chaque lame élastique sont sensiblement diamétralement opposés relativement aux axes centraux 10 et 16A. Cette dernière variante est avantageuse.

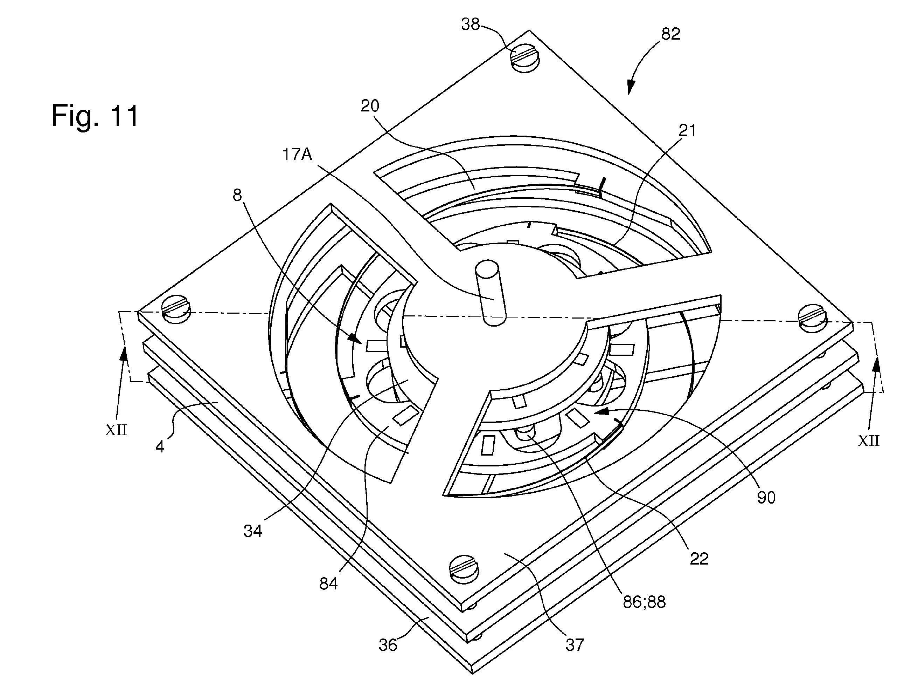

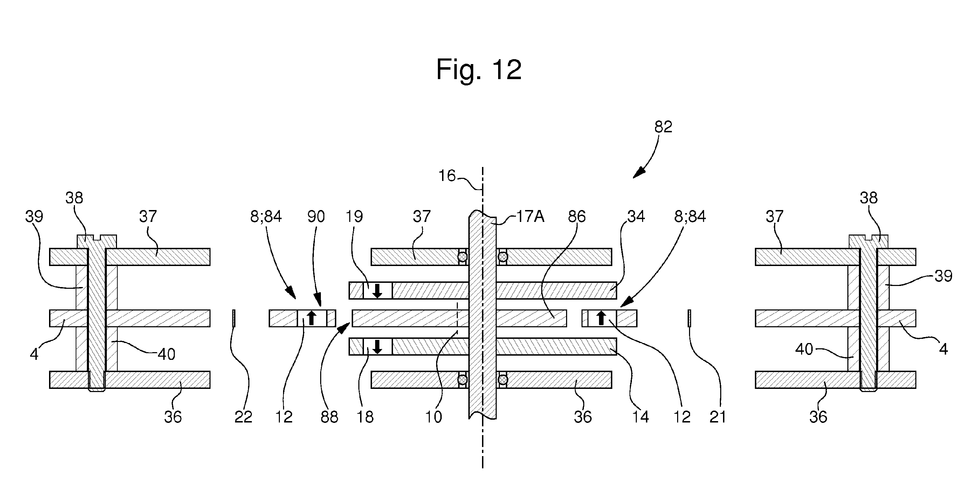

A l'aide des Figures 11, 12, 13A et 13B, on décrira ci-après un quatrième mode de réalisation de l'invention. Le dispositif régulateur selon ce quatrième mode de réalisation est un dispositif perfectionné qui associe à l'un quelconque des modes de réalisation décrits précédemment un système mécanique d'anti-décrochage du couplage entre la structure magnétique résonante et la structure magnétique tournante pour assurer le fonctionnement du mouvement horloger qui incorpore le dispositif régulateur dans une plage de couple moteur plus étendue et également pour empêcher un décrochage du couplage susmentionné en cas de chocs angulaires ou mouvements accélérés engendrant des couples supérieurs à la plage utile prévue. Les divers éléments déjà décrits et le fonctionnement du système magnétique du dispositif résonateur ne seront pas à nouveau décrits ici. On comprend de manière générale par 'système mécanique d'anti-décrochage' un système qui assure la synchronisation entre la structure magnétique résonante et la structure magnétique tournante dans une plage du couple moteur où le couplage purement magnétique pourrait ne plus suffire ou ne pas remplir sa fonction de manière suffisamment précise ou sûre et également en cas de couples supérieurs générés momentanément par des chocs ou mouvements à forte accélération. Ce système peut ainsi intervenir de préférence déjà avant que l'interaction magnétique entre ces deux structures ne soit plus suffisante pour assurer cette synchronisation, c'est-à-dire avant un couple de décrochage du couplage purement magnétique. Dans une variante, on peut donc prévoir un tel système comme un système mécanique complémentaire au système magnétique du dispositif régulateur de l'invention, ce système mécanique complémentaire intervenant seulement dans une partie supérieure de la plage totale du couple moteur prévue pour le fonctionnement de ce dispositif régulateur, la valeur supérieure de cette plage totale étant toutefois inférieure au couple de décrochage du couplage purement magnétique. Dans ce dernier cas, le système mécanique complémentaire a néanmoins une fonction de sécurité en permettant qu'un couple momentanément supérieur à la plage de fonctionnement normal n'entraîne pas une perte de la synchronisation. Dans une autre variante, on peut prévoir que le système mécanique d'anti-décrochage intervienne substantiellement que lorsque le couple de décrochage est atteint et ensuite dépassé.

La variante du quatrième mode de réalisation qui est représentée aux figures est basée sur le deuxième mode de réalisation de l'invention. Le châssis, la structure élastique et les deux structures magnétiques tournantes montées sur l'arbre 17A (structures magnétiques 14 et 34 portant respectivement un nombre N2 d'aimants 18 et un même nombre N2 d'aimants 19) sont identiques aux parties correspondantes de la variante du deuxième mode de réalisation représentées aux Figures 4 à 6. La structure magnétique résonante comprend un nombre N1 d'aimants, N1 étant différent de N2 comme déjà exposé. De manière générale, le système mécanique d'anti-décrochage est formé par un engrenage planétaire avec une roue satellite 86 munie d'une première denture 88 et tournant à l'intérieur d'une couronne 84 munie intérieurement d'une deuxième denture 90. Ensuite, la roue satellite est associée à la structure 14 ayant le nombre inférieur de périodes angulaires parmi les première et deuxième structures magnétiques 8 et 14 (le nombre inférieur d'aimants parmi les deux nombres N1 et N2), et la couronne est associée à l'autre structure 8 ayant le nombre supérieur de périodes angulaires (le nombre supérieur d'aimants parmi les deux nombres N1 et N2). Pour assurer la fonction d'anti-décrochage, la partie de l'engrenage planétaire associée à la deuxième structure magnétique 14 doit être solidaire en rotation de cette deuxième structure.

Il est prévu que les première et deuxième dentures pénètrent au moins partiellement l'une dans l'autre au moins dans une zone supérieure de la plage utile du couple moteur prévue pour un couplage purement magnétique, la valeur supérieure de cette zone supérieure définissant la valeur maximale de cette plage utile. Finalement, les première et deuxième dentures 88 et 90 sont configurées et agencées l'une relativement à l'autre de manière que, dans la plage utile du couplage purement magnétique, ces première et deuxième dentures ne se touchent pas.

Dans une variante principale, le rapport R_{Z} entre le nombre Z1 de dents 90 de la couronne et le nombre Z2 de dents 88 de la roue satellite est égal au rapport R_{M}* entre le nombre supérieur et le nombre inférieur de périodes angulaires. Ainsi, R_{Z} = Z1/ Z2 = R_{M}* = Sup (N1,N2) / Inf (N1,N2) où Inf (N1,N2) est la valeur inférieure des nombres N1 et N2 alors que Sup (N1,N2) est la valeur supérieure de ces nombres N1 et N2.

Dans la variante particulière représentée aux figures, le nombre Z2 de dents 88 de la roue satellite 86 est identique au nombre N2 d'aimants de la structure magnétique 14, respectivement 34. De même, le nombre Z1 de dents 90 de la couronne 84 est identique au nombre N1 d'aimants de la structure magnétique 8.

Dans la variante représentée aux figures, la couronne 84 forme le support amagnétique de la structure magnétique résonante 8. Ces deux éléments sont donc solidaires et forment ensemble un même organe. Dans cette variante, le nombre Z1 de dents 90 de la couronne est de préférence identique au nombre N1 d'aimants 12 de la structure magnétique résonante, les aimants étant sensiblement alignés sur les dents, comme représenté aux figures. On verra par la suite, dans une variante améliorée, que les positions angulaires des dents peuvent être décalées relativement aux positions angulaires des aimants pour augmenter la plage utile de couplage purement magnétique. Pour ce faire, on remarquera que les dents et les aimants peuvent être prévus à deux niveaux différents de l'organe qu'ils forment ensemble, notamment pour permettre un design des dents indépendant de celui des aimants et de leur agencement dans cet organe. Dans d'autres variantes, la couronne et la roue satellite sont dans un plan général différent de celui de la structure magnétique résonante, la couronne et cette structure étant formées notamment par deux éléments distincts. Dans une première variante, la couronne et la structure magnétique résonante sont solidaires et fixées ensemble au châssis par une même structure élastique. Dans une deuxième variante, la couronne et la structure magnétique résonante sont également solidaires et forment deux éléments distincts, mais il est prévu deux structures élastiques fixées respectivement à ces deux éléments distincts. Dans une troisième variante, la couronne et la structure magnétique résonante forment deux éléments distincts et ne sont pas directement solidaires l'une de l'autre (dans le sens fixées l'une à l'autre), mais chacune d'elles est fixée au châssis par sa propre structure élastique. Dans cette troisième variante, la couronne et la structure magnétique résonante sont toutefois associées l'une à l'autre par le fait que la couronne avec sa première structure élastique sont agencés pour présenter sensiblement une fréquence de résonance identique à celle de la structure magnétique résonante avec sa deuxième structure élastique.

Dans la variante représentée aux figures, la roue satellite est un élément distinct des structures magnétiques 14 et 34. Cependant, dans d'autres variantes, la roue satellite peut former un même organe avec une de ces deux structures magnétiques (c'est-à-dire avec une structure magnétique tournante). Ainsi, la pluralité d'aimants de la structure magnétique tournante sont incorporés dans ou sur la roue satellite. De préférence, le nombre Z2 de dents 88 de la roue satellite est identique au nombre N2 d'aimants 18 de la structure magnétique tournante 14, les aimants étant sensiblement alignés sur les dents. Cette situation se présente également dans une variante où les deux pluralités d'aimants sont agencées en attraction. On verra par la suite, dans une variante améliorée, que les positions angulaires des dents peuvent être décalées relativement aux positions angulaires des aimants pour augmenter la plage utile de couplage purement magnétique. Dans les autres variantes susmentionnées, on peut essentiellement distinguer deux variantes principales. Dans la première variante principale, la couronne et la roue satellite sont dans un plan général différent de celui de la structure magnétique résonante et la structure magnétique tournante est également agencée dans ce plan général différent. Dans le cas où il y a deux structures magnétiques tournantes, comme aux figures, on peut dans une variante particulière doubler l'engrenage planétaire et agencer ces deux engrenages planétaires similaires dans les deux plans généraux de ces deux structures magnétiques tournantes. La deuxième variante principale est basée sur le troisième mode de réalisation décrit précédemment. Dans ce cas, la couronne et la structure magnétique ayant le plus grand diamètre forme ensemble un premier organe et la roue planétaire et la structure magnétique ayant le plus petit diamètre forment ensemble un deuxième organe, les premier et deuxième organes étant sensiblement situés dans un même plan général. On notera toutefois que les dents et les aimants peuvent être prévus à deux niveaux différents notamment pour permettre un design des dents indépendant de celui des aimants et de leur agencement dans l'organe correspondant.

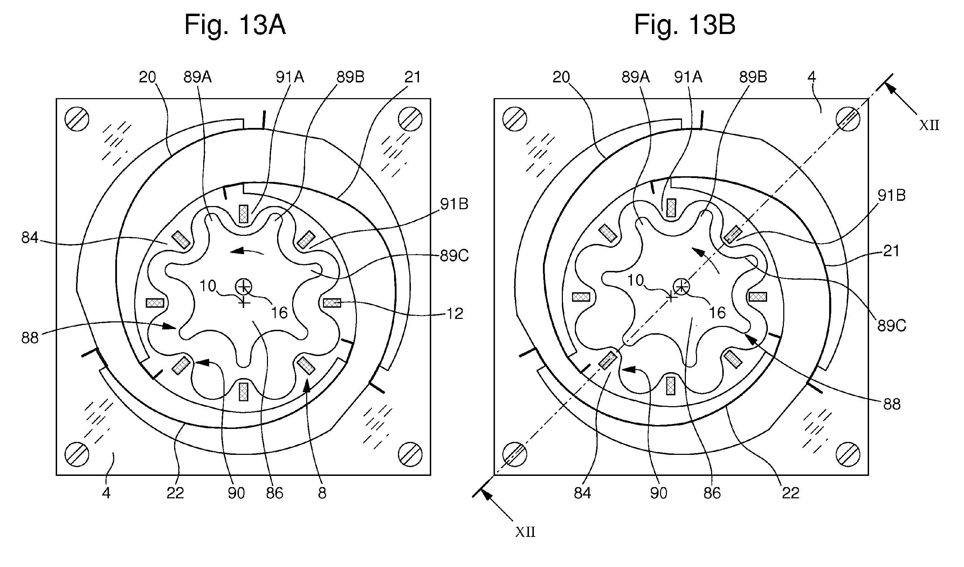

Les Figures 13A et 13B montrent le dispositif régulateur 82 au niveau de la plaque 4 respectivement dans deux positions successives lorsqu'un couple de force est appliqué sur l'arbre 17A, engendrant une rotation des structures magnétiques 14 et 34 et de la roue satellite 86. L'engrenage planétaire définit un engrenage mécanique cycloïdal qui fonctionne de manière similaire à l'engrenage magnétique cycloïdal. Dans l'exemple représenté aux Figures 13A et 13B, le couple moteur appliqué est dans la plage utile prévue pour un couplage purement magnétique. Dans ce cas, la couronne 84 roule virtuellement sans glissement et sans contact autour de la roue satellite 86 par l'effet de l'interaction magnétique. En d'autres termes, dans la plage utile susmentionnée, les cercles primitifs de la couronne et de la roue satellite ont un même rapport que ceux des structures magnétiques 8 et 14, mais l'échelle des cercles primitifs de l'engrenage planétaire est sélectionnée et le design des dentures 88 et 90 est conçu de manière que les dentures ne se touchent pas. Dans la première position relative de la roue satellite 86 et de la couronne 84 représentée à la Figure 13A, la dent 91 A de la couronne est centrée dans l'espace entre les dents 89A et 89B de la roue satellite. On remarque qu'il est prévu un jeu tangentiel de chaque côté de la dent 91 A, et de même pour les dents adjacentes (par exemple la dent 91 B) qui présentent normalement des jeux tangentiels au moins aussi grand. De plus, il est prévu un jeu radial permettant d'augmenter l'amplitude du mouvement de résonance. La situation représentée correspond notamment à un couple moteur inférieur à la valeur maximale de la plage utile prévue pour un couplage purement magnétique. En continuant la rotation de la roue satellite, on observe le roulement virtuel sans glissement et sans contact des deux dentures et on arrive à la deuxième position relative de la Figure 13B où la couronne (ayant l'axe central 10) a subi une translation circulaire autour de l'axe 16 de la roue satellite. Dans cette deuxième position relative, on se trouve dans une même situation que celle de la première position relative, mais avec un décalage angulaire correspondant au décalage angulaire entre deux aimants ou deux dents adjacentes de la couronne 84. Ainsi, la dent 91B est centrée dans l'espace entre les dents 89B et 89C de la roue satellite et les jeux tangentiels ainsi que le jeu radial sont semblables à ceux de la première position relative.

Dans une première variante, les première et deuxième dentures pénètrent l'une dans l'autre au moins dans la majeure partie de ladite plage utile dudit couple moteur. Dans une deuxième variante, les première et deuxième dentures pénètrent l'une dans l'autre sur l'ensemble de cette plage utile et finalement, dans une troisième variante correspondant à l'exemple représenté aux figures, les première et deuxième dentures pénètrent l'une dans l'autre également lorsqu'aucun couple moteur n'est appliqué à ce dispositif régulateur. Cette dernière variante peut être avantageuse car la denture d'une première partie de l'engrenage planétaire associée à la structure magnétique tournante engendre alors un décentrage initial de la structure magnétique résonante puisque des dents de la seconde partie de l'engrenage planétaire associée à cette dernière sont sensiblement alignées avec quelques dents de la première partie de l'engrenage planétaire. Ceci permet donc d'activer le dispositif régulateur dans le cas où la différence en valeur absolue |ΔN| = |N1-N2| est supérieur à un, soit |ΔN| > 1, comme déjà exposé précédemment.

Dans une variante particulière, le dispositif régulateur est prévu pour fonctionner avec un couplage purement magnétique dans une première plage utile du couple moteur et ensuite avec un couplage magnéto-mécanique dans une seconde plage utile de ce couple moteur supérieure à la première plage utile et contiguë à celle-ci. La valeur maximale de la première plage utile est prévue inférieure à une valeur de décrochage du couplage purement magnétique. Dans la seconde plage utile, les deux dentures respectives de la couronne et de la roue satellite engrènent l'une avec l'autre de manière que l'une exerce un couple d'entraînement mécanique sur l'autre qui s'ajoute au couple d'entraînement magnétique. Les deux dentures sont configurées et agencées l'une relativement à l'autre de manière que, au moins dans une zone inférieure de la seconde plage utile dont la valeur inférieure définit la valeur minimale de cette seconde plage utile, ces deux dentures présentent un jeu radial permettant une augmentation de l'amplitude de la translation sensiblement circulaire du mouvement de résonance lors d'une augmentation du couple moteur. Finalement, la structure élastique est agencée de manière qu'elle présente une déformation substantiellement élastique, de préférence purement élastique, dans les première et seconde plages utiles du couple moteur appliqué au dispositif régulateur.

Dans le cadre de ce quatrième mode de réalisation perfectionné, l'observation du couplage purement magnétique en fonction du couple moteur est importante pour optimiser le dispositif régulateur. Pour un premier couple moteur relativement faible, l'interaction magnétique est telle qu'il y a dans la zone d'engrènement magnétique (zone où les aimants de la structure magnétique résonante sont radialement le plus proche des aimants de la structure magnétique tournante) un premier déphasage (nommé également décalage angulaire) entre les aimants des deux structures magnétiques (par exemple relativement à l'axe de rotation de la structure magnétique tournante). En augmentant le couple moteur, on varie ce déphasage et on obtient un deuxième déphasage différent du premier pour un deuxième couple moteur supérieur au premier couple moteur. Plus précisément, le décalage angulaire entre les aimants des deux structures magnétiques dans le sens du couple moteur appliqué diminue lorsque ce couple moteur augmente et ce décalage angulaire, qui est notamment proche d'une demi-période magnétique pour un faible couple moteur, peut devenir relativement petit pour des couples moteur proches mais inférieurs au couple moteur de décrochage du couplage magnétique. Si, comme représenté à la Figure 11, les aimants des deux structures magnétiques sont radialement alignés sur les dents des deux parties de l'engrenage planétaire respectivement solidaires de ces deux structures magnétiques, on a le problème suivant : Les deux dentures vont entrer en contact, c'est-à-dire que les flancs latéraux de leurs dents respectives vont se toucher et un entraînement mécanique va intervenir pour un couple moteur encore éloigné du couple moteur de décrochage du couplage magnétique; ceci a pour conséquence de limiter la plage utile du couplage purement magnétique. Or le couplage purement magnétique est sans contact et donc sans frottement et sans forces d'interaction mécanique au niveau des dentures. Ces forces d'interaction mécaniques peuvent engendrer non seulement un problème de rendement énergétique, mais également un problème de fonctionnement du mode de résonance du résonateur et de précision du dispositif régulateur. En effet, la structure élastique du résonateur et les conditions de fonctionnement du mouvement horloger incorporant le dispositif régulateur en question peuvent engendrer un mouvement naturel de résonance qui ne suit pas une trajectoire bien circulaire, de même pour le mouvement de résonance résultant du couplage magnétique prévu. On a donc intérêt à avoir une plage utile de couplage purement magnétique qui soit la plus grande possible pour un bon fonctionnement du mouvement horloger dans une plage utile étendue, et donc de pouvoir s'approcher au mieux du couple de décrochage du couplage magnétique sans que les dentures n'entrent en contact et qu'un couple mécanique ne soit transmis via le couplage mécanique résultant.

Suite aux observations données ci-avant, il est proposé une variante améliorée du quatrième mode de réalisation dans laquelle la première denture de la roue satellite est agencée relativement à la deuxième denture de la couronne de manière que, dans la zone de la plage utile du couple moteur dans laquelle ces première et deuxième dentures présentent une pénétration sans contact, des dents de la première denture situées dans des espaces correspondants de la deuxième denture, dans la zone où les première et deuxième dentures sont radialement le plus proche, sont sensiblement centrées à l'intérieur d'un jeu tangentiel total donné pour un déphasage (décalage angulaire) relatif milieu, entre les périodes angulaires de la première structure magnétique et les périodes angulaires de la deuxième structure magnétique, à l'intérieur d'une plage de déphasage (décalage angulaire) relatif définie par une variation du couple moteur dans ladite plage utile.

Dans une variante ou l'engrenage mécanique planétaire est situé dans un plan général différent du plan général ou des plans généraux de l'engrenage magnétique cycloïdal, on a toute latitude pour configurer les deux engrenages indépendamment l'un de l'autre et réaliser la variante améliorée décrite ci-avant de manière optimale. Dans le cas où une structure magnétique est prévue dans un même plan général que l'engrenage mécanique, mais que l'autre structure magnétique est dans un plan général où il n'a y pas de partie de cet engrenage mécanique, on peut aisément décaler angulairement d'une distance angulaire optimale les aimants de cette autre structure magnétique relativement aux dents de la partie de l'engrenage mécanique solidaire de cette autre structure magnétique. Dans le cas du troisième mode de réalisation, on prévoira avantageusement d'agencer l'engrenage mécanique dans un niveau différent de celui des aimants, chaque structure magnétique et la partie correspondante de l'engrenage mécanique planétaire formant ensemble un organe compact présentant les deux niveaux d'engrènement. Si on veut toutefois prévoir un seul niveau avec les aimants agencés en répulsion, les têtes des dents ou les demi-dents des dentures peuvent être formés de matière aimantée. Dans une variante avec les aimants agencés en attraction, on peut prévoir une pluralité d'aimants à l'intérieur du cercle défini par les fonds des espaces de la denture correspondante; ce qui permet d'avoir cette pluralité d'aimants sensiblement alignée radialement avec les espaces de cette denture.

## Revendications

1. Dispositif régulateur de la marche d'un mouvement horloger mécanique, ce dispositif régulateur comprenant :
- un châssis;
- un résonateur fixé au châssis et comprenant une première structure magnétique annulaire et périodique ayant un premier nombre entier N1 de périodes angulaires et définissant un premier axe central, cette première structure magnétique formant la partie inertielle du résonateur;
- une deuxième structure magnétique annulaire et périodique ayant un deuxième nombre entier N2 de périodes angulaires et définissant un second axe central, le deuxième nombre N2 étant différent du premier nombre N1, cette deuxième structure magnétique étant agencée de manière à pouvoir tourner relativement audit châssis autour dudit second axe central qui a une position déterminée relativement à ce châssis;
dans lequel au moins une structure magnétique parmi les première et deuxième structures magnétiques a dans chacune de ses périodes angulaires un matériau aimanté;
ledit résonateur étant agencé de manière qu'il a un mode de résonance dans lequel ladite première structure magnétique subit, relativement audit châssis, une translation curviligne autour dudit second axe central avec une fréquence de résonance F1; lesdites première et deuxième structures magnétiques étant agencées de manière à présenter entre elles une interaction magnétique telle qu'une rotation relative de la deuxième structure magnétique relativement audit châssis et autour dudit second axe central, par l'application d'un couple moteur dans une plage utile du couple moteur, excite ledit mode de résonance et de manière que la fréquence F2 de ladite rotation relative de la deuxième structure magnétique et ladite fréquence de résonance F1 présentent entre elles, dans ladite plage utile du couple moteur, un rapport R_{Fr} déterminé, soit R_{Fr} = F1/F2, qui est égal audit deuxième nombre entier N2 divisé par la différence ΔN entre le deuxième nombre entier N2 et le premier nombre entier N1, soit ΔN = N2-N1 et R_{Fr} = N2 / ΔN.

2. Dispositif régulateur horloger selon la revendication 1, **caractérisé en ce que** ledit résonateur comprend une structure élastique reliant ladite première structure magnétique audit châssis, cette structure élastique étant agencée de manière que cette première structure magnétique a une position de repos dans laquelle les premier et second axes centraux sont sensiblement confondus, et de manière à exercer une force de rappel sensiblement en direction dudit second axe central quel que soit la position angulaire de la première structure magnétique relativement à ce second axe central.

3. Dispositif régulateur horloger selon la revendication 1 ou 2, **caractérisé en ce que** ladite force de rappel de la structure élastique est sensiblement isotrope et sensiblement proportionnelle à la distance entre les premier et second axes centraux.

4. Dispositif régulateur selon l'une quelconque des revendications précédentes, **caractérisé en ce que** ledit rapport R_{Fr} est supérieur à cinq, soit R_{Fr} > 5.

5. Dispositif régulateur selon l'une quelconque des revendications précédentes, **caractérisé en ce que** ladite première structure magnétique comprend une première pluralité d'aimants répartis régulièrement de manière circulaire et dont le nombre est égal audit nombre N1, et ladite deuxième structure magnétique comprend une deuxième pluralité d'aimants répartis régulièrement de manière circulaire et dont le nombre est égal audit nombre N2.

6. Dispositif régulateur selon la revendication 5, **caractérisé en ce que** ladite deuxième pluralité d'aimants est agencée en répulsion relativement à ladite première pluralité d'aimants.

7. Dispositif régulateur selon l'une quelconque des revendications précédentes, **caractérisé en ce que** lesdites première et deuxième structures magnétiques sont agencées dans deux plans généraux parallèles distants l'un de l'autre.

8. Dispositif régulateur selon la revendication 7, **caractérisé en ce que** ledit matériau aimanté de ladite au moins une structure magnétique présente une aimantation axiale.

9. Dispositif régulateur selon la revendication 7 ou 8, **caractérisé en ce qu'**il comprend une troisième structure magnétique ayant une configuration semblable à la première ou deuxième structure magnétique, les deux structures magnétiques semblables étant alignées selon la direction définie par le premier axe central, respectivement le second axe central et agencées de part et d'autre de la structure magnétique différente à une sensiblement même distance de cette dernière.

10. Dispositif régulateur selon l'une quelconque des revendications 1 à 6, **caractérisé en ce que** lesdites première et deuxième structures magnétiques sont agencées dans un même plan général, l'une de ces première et deuxième structures magnétiques étant située à l'intérieur de l'autre ; et **en ce que** ledit matériau aimanté de ladite au moins une structure magnétique présente une aimantation radiale.

11. Dispositif régulateur selon l'une quelconque des revendications précédentes, **caractérisé en ce que** ladite deuxième structure magnétique forme une roue d'échappement à laquelle est appliqué ledit couple moteur.

12. Dispositif régulateur selon l'une quelconque des revendications 1 à 10, **caractérisé en ce que** ledit châssis forme une roue d'échappement à laquelle est appliqué ledit couple moteur.

13. Dispositif régulateur selon l'une quelconque des revendications précédentes, **caractérisé en ce qu'**il comprend en outre un système mécanique d'anti-décrochage de la synchronisation entre lesdites première et deuxième structures magnétiques qui est formé par un engrenage planétaire avec une roue satellite munie d'une première denture et tournant à l'intérieur d'une couronne munie intérieurement d'une deuxième denture, la roue satellite étant associée à la structure ayant le nombre inférieur de périodes angulaires parmi lesdites première et deuxième structures magnétiques et la couronne étant associée à l'autre structure ayant le nombre supérieur de périodes angulaires; **en ce que** la structure associée à ladite deuxième structure magnétique est solidaire en rotation de cette deuxième structure; **en ce que**, au moins dans une zone supérieure de ladite plage utile du couple moteur dont la valeur supérieure définit la valeur maximale de cette plage utile, les première et deuxième dentures pénètrent au moins partiellement l'une dans l'autre; et **en ce que** les première et deuxième dentures sont configurées et agencées l'une relativement à l'autre de manière que, dans ladite plage utile, ces première et deuxième dentures ne se touchent pas, le couplage entre les première et deuxième structures magnétiques étant purement magnétique dans cette plage utile.

14. Dispositif régulateur selon la revendication 13, caractérisé en ce le rapport R_{Z} entre le nombre Z1 de dents de la denture de la couronne et le nombre Z2 de dents de la denture de la roue satellite est égal au rapport R_{M}* entre ledit nombre supérieur de périodes angulaires et ledit nombre inférieur de périodes angulaires.

15. Dispositif régulateur selon la revendication 13 ou 14, **caractérisé en ce que** lesdites première et deuxième dentures pénètrent au moins partiellement l'une dans l'autre sans se toucher sur l'ensemble de ladite plage utile du couple moteur.

16. Dispositif régulateur selon l'une quelconque des revendications 13 à 15 dépendantes de la revendication 2, dans lequel ladite plage utile dudit couple moteur est une première plage utile de couplage purement magnétique des première et deuxième structures magnétiques, la valeur maximale de cette première plage utile étant inférieure à une valeur de décrochage de ce couplage purement magnétique, **caractérisé en ce qu'**il comprend une deuxième plage utile du couple moteur, supérieure à la première plage utile et contiguë à cette première plage utile, correspondant à une plage utile de couplage magnéto-mécanique dans laquelle lesdites première et deuxième dentures engrènent l'une avec l'autre de manière que l'une exerce un couple d'entraînement mécanique sur l'autre ; **en ce que** les première et deuxième dentures sont configurées et agencées l'une relativement à l'autre de manière que, au moins dans une zone inférieure de la deuxième plage utile dont la valeur inférieure définit la valeur minimale de cette deuxième plage utile, ces première et deuxième dentures présentent un jeu radial permettant une augmentation de l'amplitude de ladite translation curviligne de ladite première structure magnétique lors d'une augmentation du couple moteur; et **en ce que** ladite structure élastique est agencée de manière qu'elle présente une déformation substantiellement élastique dans les première et deuxième plages utiles du couple moteur appliqué au dispositif régulateur.

17. Dispositif régulateur selon l'une quelconque des revendications 13 à 15, **caractérisé en ce que** ladite première denture de la roue satellite est agencée relativement à ladite deuxième denture de la couronne de manière que, dans une zone de ladite plage utile du couple moteur dans laquelle ces première et deuxième dentures présentent une pénétration sans contact, des dents de la première denture situées dans des espaces correspondants de la deuxième denture, dans une zone où les première et deuxième dentures sont radialement le plus proche, sont sensiblement centrées à l'intérieur d'un jeu tangentiel total donné pour un décalage angulaire relatif milieu, entre les périodes angulaires de la première structure magnétique et les périodes angulaires de la deuxième structure magnétique, à l'intérieur d'une plage de décalage angulaire relatif définie par une variation du couple moteur dans ladite plage utile.

18. Dispositif régulateur selon l'une quelconque des revendications 1 à 17, **caractérisé en ce que** la différence en valeur absolue |ΔN| entre le deuxième nombre entier N2 et le premier nombre entier N1 est égal à un, soit |ΔN| = 1.

19. Dispositif régulateur selon l'une quelconque des revendications 1 à 17, **caractérisé en ce que** ladite différence en valeur absolue |ΔN| entre le deuxième nombre entier N2 et le premier nombre entier N1 est supérieur à un, soit |ΔN| > 1.

20. Dispositif régulateur selon la revendication 19, **caractérisé en ce qu'**il comprend un moyen mécanique pour décentrer initialement ladite première structure magnétique relativement à ladite deuxième structure magnétique, de manière à engendrer un couplage magnétique initial suffisant entre les première et deuxième structures pour permettre de démarrer ce dispositif régulateur par ladite rotation relative de la deuxième structure magnétique.

21. Mouvement horloger mécanique comprenant un dispositif régulateur, un rouage compteur cadencé par ce dispositif régulateur et un dispositif moteur entraînant le rouage compteur et entretenant un mode de résonance du dispositif régulateur, **caractérisé en ce que** ledit dispositif régulateur est un dispositif régulateur selon l'une quelconque des revendications précédentes.
